# FASCICULE DE BREVET EUROPEEN

(11) **EP 1 185 157 B1**
(45) Date de publication et mention de la délivrance du brevet: **28.09.2005**
(21) Numéro de dépôt: 00927361.6
(22) Date de dépôt: 17.05.2000
(51) Int. Cl.: A01D 34/416, A01D 34/00

(54) **FIL DE COUPE SILENCIEUX POUR DEBROUSSAILLEUSES ET TAILLE-BORDURES**
GERÄUSCHLOSER FADENSCHNEIDER FÜR BUSCH- UND KANTENTRIMMER
NOISE REDUCING CUTTING WIRE FOR BUSH CUTTER AND HEDGE-TRIMMER

(30) Priorité: 20.05.1999 FR 9906598
(43) Date de publication de la demande: 13.03.2002
(73) Titulaire: SPEED FRANCE, 69658 Arnas (FR)
(72) Inventeur: LEGRAND, Emmanuel, F-01480 Villeneuve (FR)
(74) Mandataire: Le Forestier, Eric
(86) Numéro de dépôt international: PCT/FR2000/001332
(87) Numéro de publication internationale: WO 2000/070929

(56) Documents cités:
- WO-A-97/19584
- DE-A- 19 632 721
- DE-C- 4 005 879
- US-A- 4 054 993
- US-A- 4 290 257

## Description

La présente invention concerne les fils de coupe destinés à tailler et couper la végétation, utilisables sur des appareils de motoculture à tête rotative communément appelés débroussailleuses et taille-bordures.

Ces appareils sont équipés généralement d'un moteur thermique ou électrique qui entraîne en rotation, à une vitesse élevée pouvant être comprise entre environ 3000 tours/minute et 12000 tours/minute, une tête tournante supportant un ou plusieurs fils de coupe. Au cours de la rotation de la tête, et sous l'effet de la force centrifuge, le ou les fils de coupe se déploient radialement et balayent ainsi une certaine zone circulaire, à l'intérieur de laquelle ils exercent un effet tranchant sur la végétation rencontrée.

Les fils de coupe le plus couramment fabriqués et commercialisés, destinés à une telle utilisation, sont des monofilaments lisses, le plus souvent du type "monomatière", notamment réalisés en matière synthétique, par exemple en polyamide. Ces fils peuvent posséder soit une section ronde, soit une section polygonale, par exemple carrée ou en étoile.

En cours d'utilisation, de tels fils de coupe engendrent un bruit important et désagréable, s'ajoutant au bruit du moteur d'entraînement de la tête rotative. Ces bruits entraînent une pollution sonore, d'autant plus nuisible que, par leur nature même, les débroussailleuses et taille-bordures sont utilisés en milieu extérieur. Des prescriptions réglementaires, visant à limiter le bruit de ces appareils à un niveau jugé acceptable, sont d'ailleurs en cours d'élaboration.

Pour tenter de réduire le bruit engendré par les fils de coupe, en cours d'utilisation, diverses solutions ont été déjà proposées.

Ainsi, certains fils de coupe connus comportent des gorges longitudinales, droites ou hélicoïdales, de section arrondie ou anguleuse, en nombre variable (une ou plusieurs gorges longitudinales) ; ces gorges peuvent être remplacées par des nervures droites ou hélicoïdales. Il peut être ici fait référence au brevet allemand N° 4005879. Cette solution a l'inconvénient d'altérer la qualité de surface du fil, qui est un paramètre important pour sa qualité de coupe.

Une autre solution connue, applicable notamment à un fil de coupe de section carrée, consiste à torsader le fil. Cette solution, révélée par le modèle d'utilité allemand N° 9412925, est relativement efficace, mais la réduction du bruit reste fonction du nombre de tours d'hélice du fil de coupe par unité de longueur de ce fil. Par ailleurs, la torsion du fil altère sa qualité de surface; elle complique et renchérit aussi la fabrication de ce fil.

La demande de brevet français N° 2741776 au nom du Demandeur (voir aussi l'équivalent WO 9719584) propose un fil de coupe d'allure ondulée visant à réduire le bruit de fonctionnement. Dans sa réalisation de base, ce fil possède une section constante, notamment circulaire, sur toute sa longueur, et il présente des ondulations qui se répètent dans sa direction longitudinale, et suivant une direction radiale unique, le fil de coupe ondulé se développant ainsi dans un seul plan. Cette solution permet de réduire globalement le bruit, mais elle ne supprime pas certains sifflements ou autres sons aigus désagréables engendrés par le fil de coupe en cours d'utilisation.

Une autre demande de brevet français N° 2760596 au nom du Demandeur prévoit, pour diminuer le bruit de fonctionnement, un fil de coupe constitué par une âme de type monofilament, enrobée d'un revêtement granuleux conférant au fil un aspect de surface irrégulier et/ou rugueux. Il s'agit ici d'un fil de coupe composite, donc d'un type éloigné des fils "monomatière" auxquels s'intéresse la présente invention.

On a aussi proposé des fils de coupe à profil spécial, en "goutte d'eau" ou en aile d'avion, un tel profil étant censé améliorer la pénétration dans l'air. Cette solution permet seulement une réduction assez faible du bruit, et n'est donc pas particulièrement performante.

On peut citer aussi des tentatives de réalisation de fils de coupe présentant en surface de petites alvéoles, à la manière d'une balle de golf - voir par exemple la demande de brevet allemand N° 196 32 721 (figure 5). Outre les difficultés de fabrication, cette dernière solution conduit à une altération de la qualité de surface du fil.

Enfin, les brevets US N° 4054993 et US N° 4290257 montrent des fils de coupe qui possèdent des parties de plus grande section, notamment sous la forme d'éléments rapportés tels que douilles. Ces éléments visent à améliorer le pouvoir coupant du fil, ou à diminuer son usure, et non pas à réduire les nuisances sonores lors de l'utilisation de ce fil.

La présente invention vise à éliminer l'ensemble des inconvénients précédemment exposés, en fournissant un fil de coupe perfectionné, qui procure une réduction sensible des nuisances sonores et, en particulier, une élimination de tous les sifflements et sons aigus indésirables.

A cet effet, l'invention a pour objet un fil de coupe à fonctionnement silencieux pour débroussailleuses et taille-bordures, tel qu'il est défini dans la revendication 1.

L'invention fournit ainsi un fil de coupe d'allure "annelée" ou similaire, donc de section non pas constante mais au contraire variable sur sa longueur, le fil présentant typiquement des arêtes séparées les unes des autres par des parties de fil resserrées à évolution continue, et se répetant indéfiniment selon un certain "pas". Il a été constaté de façon surprenante, puis vérifié par des essais, qu'un fil de coupe ainsi conformé procurait globalement une forte baisse du niveau sonore engendré par la rotation du fil dans l'air ; de plus, le spectre de fréquences du bruit résiduel est tel que les sifflements ou sons aigus les plus désagréables se trouvent supprimés.

La géométrie de ce fil peut être caractérisée par le rapport entre la section (maximum) desdites arêtes, d'une part, et la section (minimum) des tronçons de fil situés entre ces arêtes, d'autre part.

L'invention sera de toute façon mieux comprise à l'aide de la description qui suit, en référence au dessin schématique annexé représentant, à titre d'exemples, quelques formes de réalisation de ce fil de coupe silencieux pour débroussailleuses et taille-bordures :
Figure 1 est une vue en perspective d'un fil de coupe conforme à la présente invention ;
Figue 2 est une vue en perspective, à échelle agrandie, d'un tronçon du fil de coupe de la figure 1 ;
Figure 3 représente, à plus grande échelle, un détail du fil de coupe des figures 1 et 2 ;
Figure 4 est une vue similaire à figure 2, montrant une autre forme de réalisation du fil de coupe ;
Figure 5 représente, à échelle agrandie, un détail du fil de coupe de la figure 4 ;
Figures 6 et 7 illustrent des variantes des fils de coupe des figures précédentes.

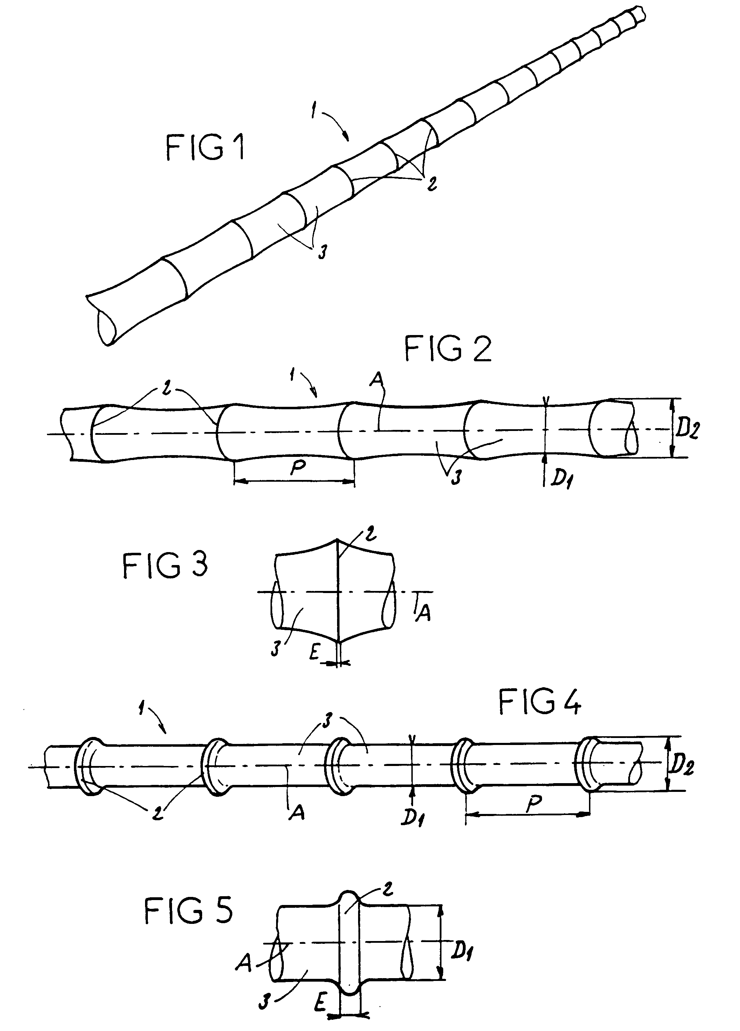

Les structures représentées aux figures 4, 5 et 7 ne font pas partie de l'invention.

La figure 1 montre de façon générale un fil de coupe 1, pour débroussailleuses ou taille-bordures, qui est un fil de section ronde, mais non constante. Ce fil 1 comporte, sur toute sa longueur, des conformations annulaires 2 de plus grande section, entre lesquelles s'étendent des parties de fil 3 intermédiaires, de plus petite section.

Comme le montrent plus particulièrement les figures 2 et 3, les conformations annulaires 2 sont ici constituées, chacune, par une arête circulaire d'épaisseur E très faible, centrée sur l'axe longitudinal A du fil 1. Ces conformations annulaires 2 sont séparées les unes de autres, dans la direction longitudinale du fil 1, par un pas constant P. Les parties resserrées 3 du fil 1, qui s'étendent entre les conformations annulaires 2, possèdent un diamètre minimal désigné par D1, tandis que le diamètre extérieur maximum des conformations annulaires 2 est désigné par D2.

Le rapport D2/D1 des diamètres précédemment définis caractérise la géométrie du fil de coupe 1. Par exemple, le diamètre minimal D1 des parties resserrées 3 du fil de coupe 1 est égal à environ 1,2 mm, tandis que le diamètre extérieur des conformations annulaires 2 est égal à environ 1,5 mm, ce qui correspond à un rapport D2/D1 égal à environ 1,25.

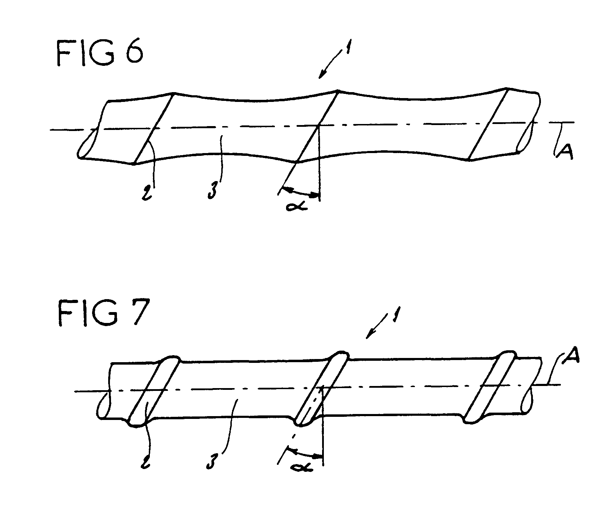

Les figures 4 et 5 montrent un autre fil de coupe 1, qui constitue une variante du précédent. Ce fil 1, encore de section circulaire, possède des conformations 2 en forme de bourrelets annulaires, d'épaisseur E plus importante et de profil arrondi, dont le diamètre extérieur maximum est indiqué en D2, et qui sont séparées les unes des autres par un pas P. Les parties resserrées 3 du fil de coupe 1, qui s'étendent entre les conformations annulaires 2, possèdent ici un diamètre D1 constant sur toutes leur longueur, le diamètre D1 étant naturellement inférieur au diamètre D2.

Dans les exemples illustrés par les figures 1 à 5, les conformations 2 sont situées dans des plans perpendiculaires à l'axe longitudinal A du fil de coupe 1. Les figures 6 et 7 illustrent des variantes de ce fil 1, dans lesquelles les conformations 2 sont situées, au contraire, dans des plans non perpendiculaires à l'axe longitudinal A du fil 1, c'est-à-dire dans des plans qui présentent une inclinaison α par rapport à un plan perpendiculaire à l'axe A.

Plus particulièrement, dans le mode de réalisation de la figure 6, les conformations 2 sont constituées par des arêtes elliptiques inclinées. Dans le mode de réalisation de la figure 7, les conformations 2 sont constituées par des bourrelets inclinés.

Dans tous les cas, le fil de coupe 1 avec conformations annulaires 2, telles que précédemment décrites, possède un fonctionnement silencieux et sans sifflements ni autres sons aigus désagréables.

L'on ne s'éloignerait pas du cadre de l'invention, telle que définie dans les revendications annexées, en modifiant les divers paramètres géométriques P, E, D1, D2 (ou leurs rapports) qui caractérisent la forme du fil de coupe 1.

## Revendications

1. Fil de coupe à fonctionnement silencieux pour débroussailleuses et taille-bordures à tête rotative, le fil de coupe possédant des arrêtes (2) circulaires ou elliptiques d'épaisseur très faible, se succédant à intervalles (P) dans la direction longitudinale (A) de ce fil de coupe (1), les arrêtes étant séparées les unes des autres par des parties longitudinales du fil de coupe présentant une section transversale plus petite, **caractérisé en ce que** la section transversale entre deux arrêtes adjacentes (2) évolue en tout point et de façon continue en partant d'une grande section transversale jusqu'à une petite section transversale intermédiaire et à nouveau jusqu'à une grande section transversale.

2. Fil de coupe selon la revendication 1, **caractérisé en ce que** les arrêtes (2) sont situées dans des plans perpendiculaires à l'axe longitudinal (A) du fil (1).

3. Fil de coupe selon la revendication 1, **caractérisé en ce que** les arrêtes (2) sont situées dans des plans non perpendiculaires à l'axe longitudinal (A) du fil (1), et présentant une inclinaison (α).

4. Fil de coupe selon l'une des revendications 1 à 3, **caractérisé en ce que** le rapport (D2/D1) entre le diamètre extérieur maximum des arrêtes et le diamètre des parties longitudinales au niveau de la section transversale la plus petite est d'environ 1,25.

## Claims

1. Silently-operating cutting wire for rotary-head brushcutters and edge trimmers, the cutting wire having circular or elliptical ridges (2) of very small thickness following each other at intervals (P) in the longitudinal direction (A) of this cutting wire (1), the ridges being separated from one another by longitudinal portions of the cutting wire that are of smaller cross-section, **characterized in that** the cross-section between two adjacent ridges evolves continuously at all points from a large cross-section to an intermediate small cross-section and back to a large cross-section.

2. Cutting wire according to Claim 1, **characterized in that** the ridges (2) are situated in planes perpendicular to the longitudinal axis (A) of the wire (1).

3. Cutting wire according to Claim 1, **characterized in that** the ridges (2) are situated in planes that are not perpendicular to the longitudinal axis (A) of the wire (1) and have a slope (α).

4. Cutting wire according to one of Claims 1 to 3, **characterized in that** the ratio (D2/D1) between the maximum outside diameter of the ridges and the diameter of the longitudinal portions in the region of the smallest cross-section is about 1.25.

## Patentansprüche

1. Schneidfaden mit geräuscharmem Lauf für Freischneider und Trimmer mit Rotationskopf, wobei der Schneidfaden kreisförmige oder elliptische Kanten (2) sehr geringer Dicke hat, die in Abständen (P) in der Längsrichtung (A) dieses Schneidfadens (1) aufeinanderfolgen, wobei die Kanten voneinander durch Längsabschnitte des Schneidfadens getrennt sind, die einen kleineren Querschnitt haben, **dadurch gekennzeichnet, daß** der Querschnitt zwischen zwei benachbarten Kanten (2) sich in jedem Punkt und kontinuierlich von einem großen Querschnitt ausgehend bis zu einem dazwischen liegenden kleinen Querschnitt und wieder zurück bis zu einem großen Querschnitt verändert.

2. Schneidfaden nach Anspruch 1, **dadurch gekennzeichnet, daß** die Kanten (2) in Ebenen senkrecht zur Längsachse (A) des Fadens (1) angeordnet sind.

3. Schneidfaden nach Anspruch 1, **dadurch gekennzeichnet, daß** die Kanten (2) in Ebenen angeordnet sind, die nicht senkrecht zur Längsachse (A) des Fadens (1) verlaufen und die eine Neigung (α) haben.

4. Schneidfaden nach einem der Ansprüche 1 bis 3, **dadurch gekennzeichnet, daß** das Verhältnis (D2/D1) zwischen dem maximalen äußeren Durchmesser der Kanten und dem Durchmesser der Längsabschnitte im Bereich des kleinsten Querschnitts ungefähr 1,25 beträgt.
